(19) Europäisches Patentamt
European Patent Office
Office européen des brevets

(11) **EP 0 716 052 B1**

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int. Cl.$^6$: **C04B 7/47**, C04B 7/44,
F27D 15/02

(21) Anmeldenummer: **95117163.6**

(22) Anmeldetag: **31.10.1995**

(54) **Anlage mit einer besonderen Kühlereinrichtung zum Herstellen von Schüttgut**

Bulk material production plant comprising a special type of cooler unit

Installation de fabrication de matériaux en vrac comprenant un dispositif particulier de refroidissement

(84) Benannte Vertragsstaaten:
**BE DE ES FR GB IT NL SE**

(30) Priorität: **07.12.1994 DE 4443589**

(43) Veröffentlichungstag der Anmeldung:
**12.06.1996 Patentblatt 1996/24**

(73) Patentinhaber:
**Doumet, Joseph E., Dipl.-Ing.**
**75006 Paris (FR)**

(72) Erfinder:
**Doumet, Joseph E., Dipl.-Ing.**
**75006 Paris (FR)**

(74) Vertreter:
**Tetzner, Michael, Dipl.-Ing. et al**
**Van-Gogh-Strasse 3**
**81479 München (DE)**

(56) Entgegenhaltungen:
DD-A- 206 422          DE-A- 2 412 695
DE-C- 641 122          FR-A- 2 584 064

## Beschreibung

Die Erfindung betrifft eine Anlage zum Herstellen von Schüttgut, insbesondere Zementklinker gemäß dem Oberbegriff des Anspruches 1.

Eine Anlage zum Herstellen von gebranntem Schüttgut, insbesondere Zementklinker besteht im wesentlichen aus einem Drehofen zum Brennen des Schüttguts sowie einem nachgeschalteten Kühler zum Kühlen des heißen Schüttguts.

Das aus dem Drehofen fallende, heiße Schüttgut wird Üblicherweise mit Luft auf eine lager- und verarbeitungsfähige Temperatur abgekühlt. Die vom Schüttgut an die Luft abgegebene Wärme wird so zu ca. 75 % mit der Verbrennungsluft direkt in den Drehofen zurückgeführt. Die restlichen 25 % der in der Luft enthaltenen Wärme sind überschüssige Abluft, die, falls keine externe Verwertungsmöglichkeit besteht, als Verluste in die Atmosphäre abgegeben werden.

Aus der DD-A-206 422 ist ein Verfahren zum Abkühlen heißer Schüttgüter vorgesehen, bei dem das heiße Schüttgut durch Vergasung eines Brennstoffes mit Wasserdampf abgekühlt wird, indem die Vergasungsreaktion dem heißen Schüttgut die notwendige Reaktionsenthalpie entzieht.

Der Erfindung liegt die Aufgabe zugrunde, die Anlage zum Herstellen von Schüttgut gemäß dem Oberbegriff des Anspruches 1 dahingehend zu verbessern, daß die für den Ofen rekuperierte Wärmemenge erhöht wird.

Diese Aufgabe wird durch die kennzeichnenden Merkmale des Anspruches 1 gelöst. Das bei der Vergasungsreaktion entstehende Brenngas wird für das Brennen des Schüttguts im Drehofen verwendet. Die für das Brennen notwendige Verbrennungsluft wird durch Nachkühlung des heißen Schüttguts vorgewärmt. Mit einem derartigen Verfahren ist es möglich, die Klinkerendkühlung nur mit einer verwertbaren Verbrennungsluftmenge zu betreiben.

Das bei der Vergasungsreaktion entstehende Brenngas, insbesondere Wasserstoff und Kohlenmonoxid, erzeugt eine hohe Verbrennungstemperatur im Drehofen, wodurch sich die Klinkerqualität verbessert und der Drehofen kürzer dimensioniert werden kann.

Weitere Ausgestaltungen der Erfindung sind Gegenstand der Unteransprüche.

Ein erfindungsgemäßes Ausführungsbeispiel sowie weitere Vorteile der Erfindung werden anhand der nachfolgenden Beschreibung und der Zeichnung näher erläutert.

In der Zeichnung zeigen

Fig.1    eine schematische Darstellung einer erfindungsgemäßen Anlage und

Fig.2    eine Schnittdarstellung längs der Linie III-III der Fig.1.

Die Kühlung des Schüttgutes erfolgt durch Anwendung der heterogenen Wassergasreaktion

$$C + H_2O \rightarrow CO + H_2 - Q \, ,$$

wobei gleichzeitig ein im Prozeß zu verwendendes Brenngas erzeugt wird. Die Reaktionsenthalpie Q, die bei der Vergasungsreaktion dem heißen Schüttgut entzogen wird, beträgt ungefähr 120 J/mol.

Bei dieser Art der Kühlung des heißen Schüttguts beträgt die Einsparung an thermischer Energie für den Ofenprozeß bis zu 100 kcal/kg Schüttgut.

Zudem kann bei der Herstellung von Weißzementklinker dessen Weißgrad durch die reduzierende Atmosphäre erhöht werden.

Als Brennstoff kommen insbesondere Kohle mit den unterschiedlichsten Kohlenwasserstoffverhältnissen als auch Öl, z. B. Schweröl in Betracht, das einen höheren Wasserstoffanteil als Kohle aufweist.

Als Hauptreaktionsgleichung gilt:

$$C_xH_y + x * H_2O \rightarrow x * CO + (x+y/2) * H_2 - Q$$

$$z.B. \; CH_4 + H_2O \rightarrow CO + 3 * H_2 - 193 \; J/mol$$

Bei der Zementklinkerherstellung nach dem erfindungsgemäßen Verfahren wird die Klinkerwärme in einem Temperaturbereich von ungefähr 1.400 °C bis ca. 950 bis 1.000 °C zunächst für die endotherme Vergasungsreaktion genutzt. Das bei diesem Prozeß entstehende Brenngas wird direkt dem Drehofen 1 zugeführt, kann aber auch teilweise in den Vorcalcinator des Vorwärmers eingeleitet werden. Sollte das Wärmeangebot des Brenngases für den Ofenprozeß nicht ausreichen, wird mit einer konventionellen Zusatzfeuerung der zusätzliche Wärmebedarf gedeckt.

Die notwendige Verbrennungsluft wird durch Nachkühlung des ungefähr 950 bis 1.000°C heißen Klinkers vorgewärmt. Dies ermöglicht bei entsprechender Dimensionierung des Kühlers einen abluftfreien Kühlerbetrieb und erspart dadurch erhebliche Investitions- und Betriebskosten.

Gewisse Bauteile des Reaktors, die aus Gründen der thermischen Werkstoffstandzeit gekühlt werden müssen, können mit Kühlwasser effektiv geschützt werden, wobei das erwärmte Wasser für die Erzeugung des Wasserdampfes genützt werden kann.

Die in dem zur Vergasung eingebrachten Brennstoff enthaltene Asche beeinflußt nicht die Klinkerchemie und muß bei der Rohmehlrezeptur nicht berücksichtigt werden. Außerdem können preiswertere Brennstoffe mit höherem Schwefelgehalt zur Vergasung eingesetzt werden. Die Asche und der freie Kalkgehalt des Klinkers bilden Verbindungen mit hydraulischen Eigenschaften. Schwefel wird in dieser Reaktionsfolge besonders gut absorbiert und in Form von Sulfat gebunden. Gegenüber der direkten Brennstoffeinbringung wird der innere Schwefelkreislauf in einer Ofenanlage dadurch entlastet und zugleich kann durch die Sulfatbildung am Klinker der notwendige Gipszusatz zur Zementmahlung reduziert werden.

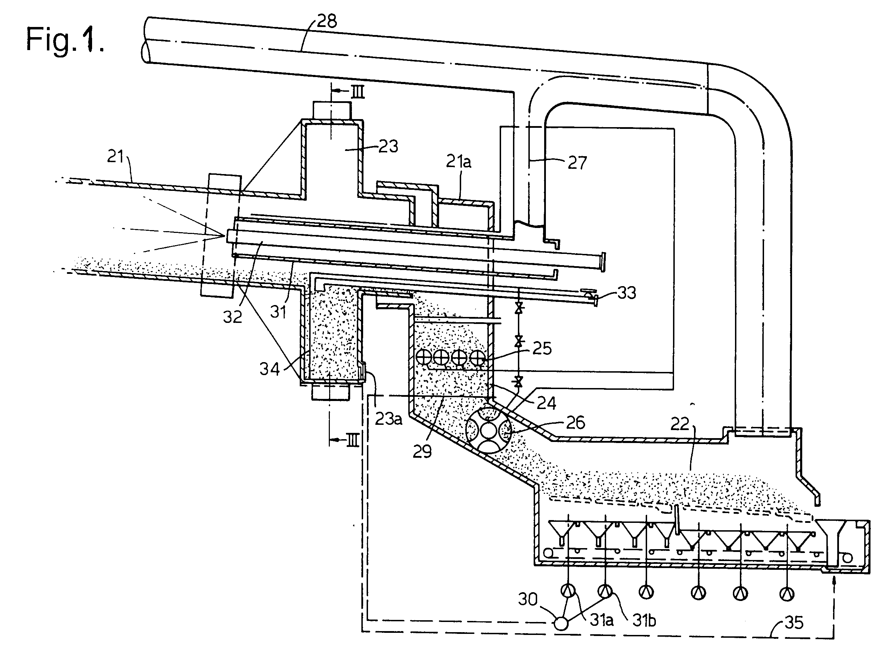

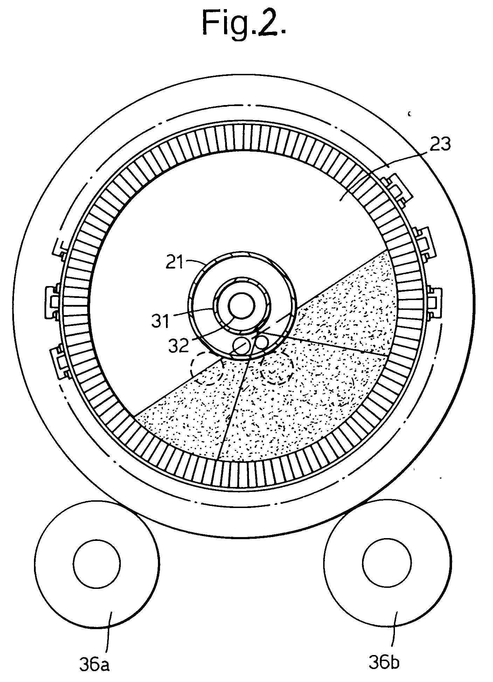

Die Fig.1 und 2 zeigen eine erfindungsgemäße Anlage zum Herstellen von gebranntem Schüttgut. Sie besteht im wesentlichen aus einem Drehofen 21 zum Brennen des Schüttguts, einem nachgeschalteten Kühler 22 zum Kühlen des heißen Schüttguts sowie einem Reaktor 23 zur Vorkühlung des heißen Schüttguts durch Vergasung eines Brennstoffs mit Wasserdampf, wobei die Vergasungsreaktion dem heißen Schüttgut die notwendige Reaktionsenthalpie entzieht.

Im dargestellten Ausführungsbeispiel ist der Reaktor 23 als im Durchmesser vergrößerter Teil des Drehofens ausgebildet und an dessen Auslaufende angeordnet. Der Drehofen 21 weist an seinem Auslaßende einen Ofenkopf 21a auf, der zusammen mit einer Verbindungseinrichtung 24 den Übergang vom Drehofen zum Kühler darstellt.

Der Ofenkopf 21a sowie die Verbindungseinrichtung 24 sind auf herkömmliche Weise ausgestaltet. In der Verbindungseinrichtung 24 ist ein Brecher, vorzugsweise ein Walzenbrecher 25 angeordnet, der zweckmäßigerweise von innen durch demineralisiertes Wasser gekühlt wird. Der Klinker wird hier beispielsweise auf eine Partikelgröße von 25 mm zerkleinert, bevor er zu einer Zellenradschleuse 26 gelangt, die den Klinker dem Kühler 22 zuführt. Die Zellenradschleuse 26 wird vorzugsweise auch von innen mit demineralisiertem Wasser gekühlt.

Im Kühler 22 wird das bereits vorgekühlte Schüttgut mittels Luft weiter abgekühlt. Die dabei erwärmte Kühlluft wird als Sekundärluft 27 bzw. Tertiärluft 28 in der üblichen Art und Weise als Verbrennungsluft in der Anlage verwendet.

In der Verbindungseinrichtung 24 ist kurz vor der Zellenradschleuse 26 eine Druckmeßeinrichtung 29 vorgesehen, die über eine Steuereinrichtung 30 die ersten beiden Ventilatoren 31a und 31b des Kühlers 22 in der Geschwindigkeit derart steuert, daß sich im Bereich der Druckmeßeinrichtung 29 kein Druck aufbaut.

Die vom Kühler 22 erzeugte Sekundärluft 27 wird über eine Sekundärluftleitung 31 im Bereich des Ofenkopfes 21a in den Drehofen 21 eingeführt. Die Sekundärluftleitung 31 ist doppelwandig ausgebildet und wird mit demineralisiertem Wasser gekühlt. In der Mitte der Sekundärluftleitung 31 ist ein zusätzlicher Brenner 32 für beliebigen Brennstoff vorgesehen, der den möglicherweise nicht ausreichenden Brennstoff aus dem Vergasungsverfahren ergänzt. Dieser Brenner 32 wird ferner zum Anfahren des Drehofens verwendet.

Die durch die Sekundärluftleitung 31 strömende Sekundärluft weist eine Temperatur von ungefähr 750 °C auf und verbrennt das im Reaktor 23 entstehende Brenngas.

Der in diesem Ausführungsbeispiel dargestellte Reaktor 23 ist im Durchmesser etwa dreimal so groß wie der Drehofen 21, und die Breite des Reaktors entspricht etwa 1/5 seines Durchmessers. Die Dimensionierung des Reaktors 23 ermöglicht eine für das Vergasungsverfahren ausreichende Verweilzeit des Klinkers im Reaktor. Durch den vergleichsweise großen Durchmesser findet im Reaktor 23 auch eine Zerkleinerung der großen Klinkerklumpen statt. Zudem wird der Zementklinker mit der Kohle oder einem anderen Brennstoff für die Vergasung in optimaler Weise gemischt. Zur Unterstützung dieses Vorganges kann der Reaktor auch mit keramischen Hubsteinen zum Anheben des Zementklinkers versehen sein. Die Rotation der Drehofen-Reaktor-Anordnung führt zu einer ständigen Durchmischung des zu vergasenden Brennstoffes mit dem Zementklinker.

Neben der üblichen Abstützung des Drehofens 21 über wenigstens zwei Laufrollenstationen wird im dargestellten Ausführungsbeispiel auch der Reaktor 23 über Laufrollen 36a, 36b abgestützt.

Die Dimensionierung des Reaktors 23 ist jedoch lediglich beispielhaft zu verstehen und kann in Abhängigkeit der Reaktivität des Brennstoffs variiert werden.

Der Reaktor 23 weist ferner eine als Schneckenförderer 33 ausgebildete Einrichtung zum Aufgeben eines Brennstoffs, insbesondere Kohle, auf. Der Schneckenförderer ist wiederum doppelwandig ausgebildet und wird mit demineralisiertem Wasser gekühlt. Die Aufgabestelle des Brennstoffs liegt im Eintrittsbereich des heißen Schüttguts in den Reaktor 23.

Der für den Vergasungsprozeß benötigte gesättigte Wasserdampf wird vollständig oder teilweise aus dem Kühlwasser der verschiedenen, oben beschriebenen Anlagenteilen gewonnen.

Ferner weist der Reaktor 23 eine Einrichtung 34 zum Einblasen des Wasserdampfes in das mit dem Brennstoff vermischte Schüttgut auf. Diese Einrichtung ist parallel zu den den Reaktor 23 begrenzenden Wänden angeordnet und ist in Form einer Platte ausgebildet, deren Kanten abgekantet sind, um einen möglichst geringen Widerstand für den in den Reaktor kommenden Klinker zu bilden. Der Dampf wird vorzugsweise im Bereich des Bodens des Reaktors 23 ausströmen.

Wird flüssiger Brennstoff für den Vergasungsprozeß verwendet, oder beispielsweise Methangas, werden diese Brennstoffe mit einer ähnlichen Einrichtung, wie sie zum Einblasen des Wasserdampfes verwendet wird, dem Reaktor zugeführt.

Die Einrichtung 34 zum Einführen des Wasserdampfes ist normalerweise stationär vorgesehen. Sie kann jedoch auch in Richtung der Drehbewegung der Drehofen-Reaktor-Anordnung hin- und herbeweglich angeordnet werden, um die wirksamste Stelle für das Vergasungsverfahren zu erreichen.

Am unteren Ende des Reaktors 23 ist ferner eine verschließbare Öffnung 23a vorgesehen, um den im Reaktor befindlichen Klinker über eine gestrichelt dargestellte Fördereinrichtung 35 zum Kühler 22 zu transportieren, wenn ein längerer Ofenstop erforderlich ist.

Beim Start der Drehofen-Reaktor-Anordnung wird der sich in der Sekundärluftleitung 31 befindliche zusätzliche Brenner verwendet. Wenn sich das Brennstoff-Wasserstoff-Verhältnis auf die Vergasungskapazität des Reaktors 23 eingestellt hat, kann der Brennvorgang unabhängig vom zusätzlichen Brenner 32 betrieben werden, wobei der verbrauchte Brennstoff, die Regulierung der Flamme und die Menge des dem Drehofen zugeführten Brennstoffs sowie der Vorcalcinationsgrad berücksichtigt werden müssen.

Mit Hilfe des oben beschriebenen Reaktors gelangt das heiße Schüttgut bereits vorgekühlt in den Kühler, so daß die gesamte im Kühler zu verwendende Luftmenge als Sekundär- bzw. Tertiärluft in den anderen Anlagenteilen verwendet werden kann. Es muß daher keine überschüssige Wärmemenge an die Atmosphäre abgegeben werden. Auf diese Weise können zwischen 75 und 100 kcal/kg an Energie eingespart werden. Ferner kann auf Filter und Reinigungseinrichtungen für die ansonsten in die Atmosphäre abzugebenden Luftmengen verzichtet werden. Das im Reaktor produzierte Gas $(CO + H_2)$ trifft auf die Sekundärluft mit einer Temperatur von ungefähr 1.000 °C, während die Sekundärluft etwa 750 °C heiß ist. Die Temperatur der Flamme kann daher leicht Temperaturen zwischen 2.300 und 2.500 °C erreichen. Durch diese hohe Temperatur der Flamme kann der Brennprozeß wesentlich leichter gesteuert werden. Auch das für den Schutz der Auskleidung der Sinterzone erforderliche Anbacken des Klinkers läßt sich wesentlich einfacher steuern.

Das gebrannte Material, d.h. der Zementklinker, wird bei Erreichen des Reaktors praktisch sofort durch die Pyrolyse des Brennstoffs abgeschreckt, so daß seine Temperatur innerhalb weniger Minuten um 250 °C fällt. Die Vergasungsreaktion wird dann weitergeführt, bis die Temperatur etwa 950 bis 1.000 °C erreicht hat.

Die hydraulischen Eigenschaften des Zementklinkers werden durch die unmittelbare Abschreckung um ungefähr 250 °C wesentlich verbessert, so daß sich eine verbesserte Zementklinkerqualität ergibt.

Die bei der Vergasungsreaktion verwendeten Brennstoffaschen müssen nicht bei der Rohstoffzusammensetzung berücksichtigt werden. Diese Aschen bilden einen Füllstoff im Klinker. Steinkohle und Braunkohle mit hohen Ascheanteilen sowie Kohlen mit hohen flüchtigen Bestandteilen können daher verwendet werden. Der im Reaktor 23 zugeführte Brennstoff muß weder getrocknet noch zerkleinert werden und kann in Form von 5 bis 10 mm-Partikeln aufgegeben werden.

Die Calcium- und Alkalisulphate zersetzen sich durch die schnelle Abschreckung wesentlich weniger als in der normalen Kühlluft, so daß ein großer Anteil im Klinker verbleibt. Dadurch vereinfachen sich die Schwefelprobleme des Drehofens erheblich und ermöglichen die Verwendung von Brennstoffen mit einem höheren Schwefelgehalt. Der Schwefel des vergasten Brennstoffes verbleibt im Klinker als Calciumsulfid.

Mit dem erfindungsgemäßen Reaktor kann in jedem Drehofen sowohl weißer als auch der normale graue Zementklinker hergestellt werden, da die Vergasungsreaktion den weißen Klinker in Anwesenheit von hochreduzierenden Gasen (CO und $H_2$) kühlt, wodurch sich der Weißgrad des Zements stark verbessert.

Durch die chemische Zersetzung des Wassers während der Vergasungsreaktion entsteht wesentlich weniger Stickstoff in den Drehofengasen und im Vorwärmer. In Abhängigkeit von der Qualität des vergasten Brennstoffes kann das Gasvolumen um 10 bis 14 % verringert werden, wodurch wiederum Energie eingespart wird.

**Patentansprüche**

1. Anlage zum Herstellen von gebranntem Schüttgut, insbesondere Zementklinker mit

     a) einem Drehofen (21) zum Brennen des Schüttguts

     b) einen nachgeschalteten Kühler (22) zum Kühlen des heißen Schüttguts,

     c) eine Einrichtung (33) zum Aufgeben eines Brennstoffs auf das zu kühlende heiße Schüttgut und

     d) eine Einrichtung (34) zum Einblasen von Wasserdampf in das mit dem Brennstoff vermischte Schüttgut, wodurch eine Vergasungsreaktion hervorgerufen wird, die dem heißen Schüttgut die notwendige Reaktionsenthalpie entzieht,
     dadurch gekennzeichnet, daß

     e) ein Reaktor (23) vorgesehen ist, der die Einrichtung (33) zum Aufgeben des Brennstoffs und die Einrichtung (34) zum Einblasen des Wasserdampfes aufweist und

     f) der Reaktor (23) als Teil des Drehofens ausgebildet ist und mit diesem rotiert.

2. Anlage nach Anspruch 1, dadurch gekennzeichnet, daß der Reaktor (23) als im Durchmesser vergrößerter Teil des Drehofens ausgebildet ist.

3. Anlage nach Anspruch 2, dadurch gekennzeichnet, daß der Reaktor (23) unmittelbar vor dem Austragsende des Drehofens angeordnet ist.

4. Anlage nach Anspruch 1, dadurch gekennzeichnet, daß die Einrichtung (34) zum Einblasen von Wasserdampf plattenartig ausgebildet ist.

5. Anlage nach Anspruch 1, dadurch gekennzeichnet, daß die Aufgabestelle des Brennstoffes im Eintrittsbereich des heißen Schüttgutes in dem Reaktor (23) liegt.

## Claims

1. Apparatus for producing fired bulk material, particularly cement clinker, with

   a) a rotary kiln (21) for firing the bulk material

   b) a cooler (22) connected downstream for cooling the hot bulk material,

   c) an arrangement (33) for delivering a fuel to the hot bulk material to be cooled and

   d) an arrangement (34) for blowing steam into the bulk material which is mixed with the fuel, causing a gasification reaction which extracts the necessary reaction enthalpy from the hot bulk material,
   characterised in that

   e) a reactor (23) is provided which has the arrangement (33) for delivery of the fuel and the arrangement (34) for blowing in of the steam, and

   f) the reactor (23) is constructed as part of the rotary kiln and rotates therewith.

2. Apparatus as claimed in Claim 1, characterised in that the reactor (23) is constructed as a part of the rotary kiln with enlarged diameter.

3. Apparatus as claimed in Claim 2, characterised in that the reactor (23) is disposed immediately before the discharge end of the rotary kiln.

4. Apparatus as claimed in Claim 1, characterised in that the arrangement (34) for blowing in steam is constructed like a plate.

5. Apparatus as claimed in Claim 1, characterised in that the feed point for the fuel lies in the inlet region of the hot material in the reactor (23).

## Revendications

1. Installation de production de matière en vrac calcinée, en particulier de clinker de ciment, comprenant :

   a) un four rotatif (21) de calcination de la matière en vrac,
   b) un réfrigérant (22) monté en aval pour le refroidissement de la matière chaude en vrac,

   c) un dispositif (33) pour déverser un combustible sur la matière chaude en vrac à refroidir et
   d) un dispositif (34) d'insufflation de vapeur d'eau dans la matière en vrac mélangée au combustible de manière à déclencher une réaction de gazéification qui soutire de la matière chaude en vrac l'enthalpie nécessaire à la réaction,
   caractérisée en ce que
   e) un réacteur (23) qui est prévu comprend le dispositif (33) de déversement du combustible et le dispositif (34) d'insufflation de la vapeur d'eau et
   f) le réacteur (23) est conformé en partie du four rotatif et tourne avec celui-ci.

2. Installation selon la revendication 1, caractérisée en ce que le réacteur (23) est conformé en partie du four rotatif dont le diamètre est agrandi.

3. Installation selon la revendication 2, caractérisée en ce que le réacteur (23) est disposé immédiatement au-devant de l'extrémité de décharge du four rotatif.

4. Installation selon la revendication 1, caractérisée en ce que le dispositif (34) d'insufflation de vapeur d'eau est conformé à la manière d'une plaque.

5. Installation selon la revendication 1, caractérisée en ce que le lieu de déversement du combustible est situé dans la zone d'entrée de la matière chaude en vrac dans le réacteur (23).

Fig.1.

EP 0 716 052 B1

# Fig.2.